# EUROPEAN PATENT APPLICATION

(11) **EP 4 644 090 A1**
(43) Date of publication of application: **05.11.2025**
(21) Application number: 23912314.4
(22) Date of filing: 28.12.2023
(51) Int. Cl.: B29C 49/64, B29C 49/06

(54) **PRODUCTION DEVICE FOR RESIN CONTAINER, PRODUCTION METHOD FOR RESIN CONTAINER, AND MOLD FOR TEMPERATURE ADJUSTMENT**

(30) Priority: 28.12.2022 JP 2022211667
(71) Applicant: Nissei ASB Machine Co., Ltd., Komoro-shi, Nagano 384-8585 (JP)
(72) Inventor: KOMIYAMA Tomokazu, Komoro-shi, Nagano 384-8585 (JP); OGIHARA Manabu, Komoro-shi, Nagano 384-8585 (JP); NAGASAKI Atsushi, Komoro-shi, Nagano 384-8585 (JP)
(74) Representative: Novagraaf International SA
(86) International application number: PCT/JP2023/047252
(87) International publication number: WO 2024/143537

(57) **Abstract**

A manufacturing apparatus (100) for a resin container includes an injection molding unit that includes an injection-molding mold, injects a molten resin into an injection cavity defined by the injection-molding mold, and forms a preform (20), a temperature adjusting unit (120) that adjusts a temperature of the preform (20) to a temperature suitable for blow molding, and a blow molding unit (130) that blow-molds the preform (20) whose temperature has been adjusted. The temperature adjusting unit (120) includes a rod member (122) configured to be inserted into the preform (20), and a plurality of air flowing ports (122a) capable of ejecting or sucking air, as viewed along a direction perpendicular to an axis (X) direction of the preform (20), are formed in the rod member (122) in the axis (X) direction.

## Description

### [TECHNICAL FIELD]

The present disclosure relates to a manufacturing apparatus for a resin container, a manufacturing method for a resin container, and a mold for temperature adjustment.

### [BACKGROUND ART]

Patent Literature 1 discloses a preform provided for the manufacture of a resin container.

### [CITATION LIST]

### Patent Literature

Patent Literature 1: WO 2021/078358

### [SUMMARY OF INVENTION]

### [TECHNICAL PROBLEM]

In order to shorten a cycle time taken for manufacturing resin containers, it is desired to cool a preform in a short time in a temperature adjusting unit. However, depending on the shape and size of a resin container to be manufactured, the cooling rate is insufficient in some cases in a cooling method of related art.

An object of the present disclosure is to provide a manufacturing apparatus for a resin container with a high cooling rate of a preform, a manufacturing method for a resin container, and a mold for temperature adjustment.

### [SOLUTION TO PROBLEM]

A manufacturing apparatus for a resin container according to an aspect of the present disclosure includes:
an injection molding unit including an injection-molding mold and configured to inject a molten resin into an injection cavity defined by the injection-molding mold and form a preform;
a temperature adjusting unit configured to adjust a temperature of the preform to a temperature suitable for blow molding; and
a blow molding unit configured to blow-mold the preform whose temperature has been adjusted.
The temperature adjusting unit includes a rod member configured to be inserted into the preform, and
a plurality of air flowing ports configured to eject or suck air, as viewed along a direction perpendicular to an axial direction of the preform, are formed in the rod member in the axial direction.

A manufacturing method for a resin container according to an aspect of the present disclosure includes:
an injection molding step of injecting a molten resin into an injection cavity defined by an injection-molding mold and forming a preform;
a temperature adjusting step of adjusting a temperature of the preform to a temperature suitable for blow molding; and
a blow molding step of blow-molding the preform whose temperature has been adjusted.

The temperature adjusting step includes ejecting or sucking air through an air flowing port formed in an outer periphery of a rod member inserted into the preform, and
a plurality of the air flowing ports, as viewed along a direction perpendicular to an axial direction of the preform, are formed in the axial direction.
A mold for temperature adjustment according to an aspect of the present disclosure is a mold for temperature adjustment configured to adjust a temperature of a preform formed by injection molding to a temperature suitable for blow molding, the mold for temperature adjustment including:
   a temperature adjusting mold constituting an inner wall surface of a temperature adjusting cavity, and
   a rod member configured to be inserted into the preform.
   A plurality of air flowing ports configured to eject or suck air, as viewed along a direction perpendicular to an axial direction of the preform, are formed in the rod member in the axial direction.

### [ADVANTAGEOUS EFFECTS OF INVENTION]

According to the present disclosure, a manufacturing apparatus for a resin container with a high cooling rate of a preform, a manufacturing method for a resin container, and a mold for temperature adjustment can be provided.

### [BRIEF DESCRIPTION OF DRAWINGS]

FIG. 1 illustrates a block diagram of a manufacturing apparatus for a resin container according to the present embodiment.
FIG. 2 illustrates a temperature adjusting unit as an example.
FIG. 3A illustrates a rod member as an example.
FIG. 3B illustrates a rod member as an example.
FIG. 4 illustrates a manufacturing method for a resin container as an example.

### [DESCRIPTION OF EMBODIMENTS]

Hereinafter, as an embodiment of the present disclosure, a manufacturing apparatus 100 and a manufacturing method for a resin container will be described with reference to the drawings. Dimensions of the members illustrated in the drawings may be different from actual dimensions of the members for convenience of description.

For convenience of description, the expressions "up-down direction" and "left-right direction" will be used as appropriate. Here, the "up-down direction" is a direction including an "upward direction" and a "downward direction". The "left-right direction" is a direction including a "leftward direction" and a "rightward direction". The reference sign "U" depicted in the drawings described below indicates an upward direction. The reference sign "D" indicates a downward direction. The reference sign "L" indicates a leftward direction. The reference sign "R" indicates a rightward direction. Unless otherwise specified, a direction in which openings of a preform and a resin container are provided is described as an upward direction.

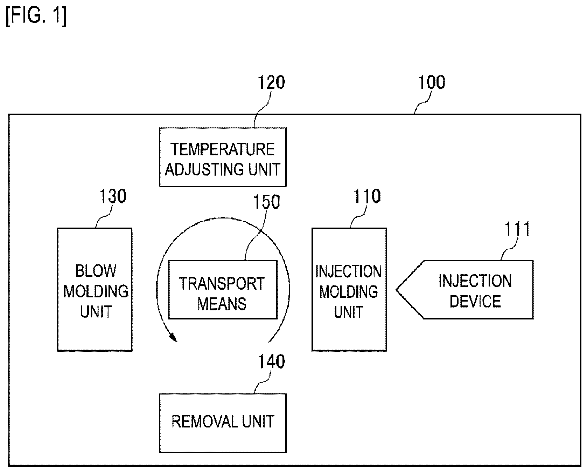

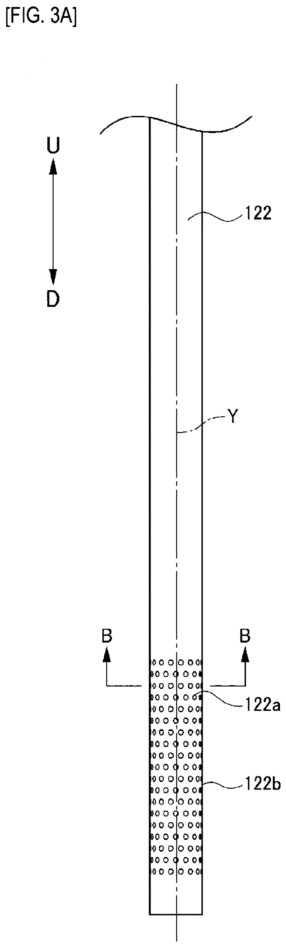

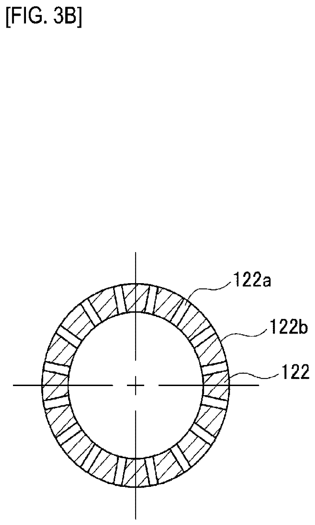

FIG. 1 illustrates a block diagram of the manufacturing apparatus 100 for a resin container according to the present embodiment. The manufacturing apparatus 100 manufactures a resin container by blow-molding a preform 20 (see FIG. 3) by the hot parison method. The preform 20 includes a neck portion 21 forming an opening of the preform 20, a body portion 22 connected to the neck portion 21, and a bottom portion 23 connected to the body portion 22 and closing one end of the preform 20. As exemplified in FIG. 1, the manufacturing apparatus 100 includes an injection molding unit 110, a temperature adjusting unit 120, a blow molding unit 130, and a removal unit 140. The injection molding unit 110 manufactures the preform 20 described below by a molten resin being injected from an injection device 111. The temperature adjusting unit 120 adjusts the temperature of the preform 20 to a blow optimal temperature that is a temperature optimal for blow molding. The blow molding unit 130 manufactures a resin container by blow-molding the preform 20. The removal unit 140 removes the resin container manufactured by the blow molding unit 130.

The material constituting the preform 20 or a resin container 30 is a thermoplastic synthetic resin. The material constituting the preform 20 or the resin container 30 may be a material selected from the group consisting of polyethylene terephthalate (PET)), polyethylene naphthalate (PEN), polycyclohexane dimethylene terephthalate (PCTA), Tritan (trade name: copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA, acrylic), and polylactic acid (PLA), for example. The most preferable material for the preform 20 and the resin container 30 of the present embodiment is PET.

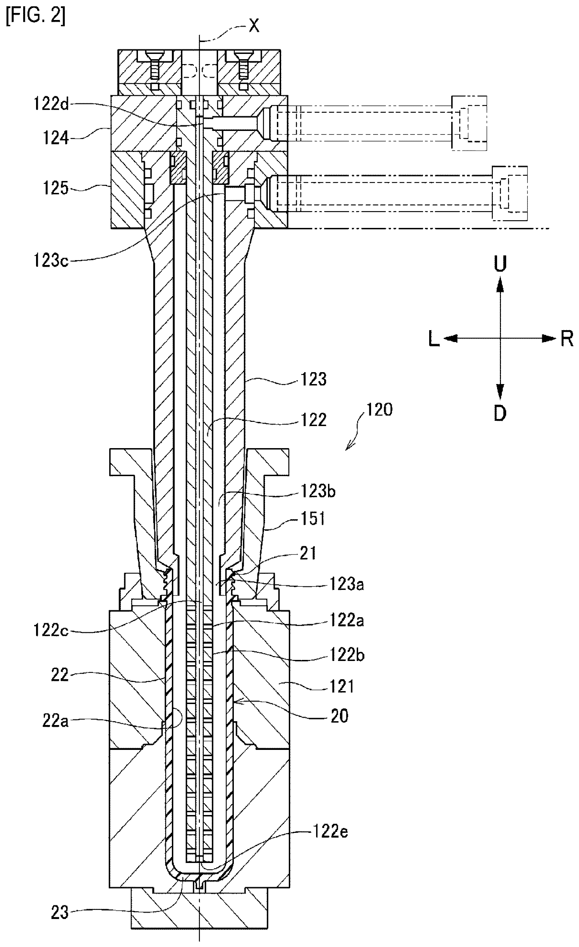

The shape of the preform 20 is illustrated in FIG. 2 as an example. The preform 20 is made of a crystalline thermoplastic resin (e.g., PET), and has features such as (the inside diameter of the neck portion 21)/(the entire length of the preform 20) being equal to 1/6 to 1/11 (or (the inside diameter of the neck portion 21)/(the length of the body portion 22) being equal to 1/5 to 1/10), and the thickness of the body portion 22 being equal to 7 mm to 10 mm. The inside diameter of the body portion 22 is gradually reduced toward the bottom portion 23 in the longitudinal axis direction to form a tapered shape. Further, the preform 20 satisfies a condition that the stretch ratio in the longitudinal axis direction is in a range from 1.0 time to 1.2 times and the transverse stretch ratio is 4 times to 6 times with respect to the resin container to be blow-molded. The weight of the preform is, for example, 110 g to 700 g. Thus, the preform 20 has a shape in which the inside diameter of the neck portion 21 is relatively small compared to the length of the body portion 22 while the body portion 22 is thick. The resin container manufactured from the preform 20 is a container of a type that is not substantially stretched in the longitudinal direction in the blow molding unit (e.g., a 5-gallon container for a water server).

The injection molding unit 110, the temperature adjusting unit 120, the blow molding unit 130, and the removal unit 140 are provided at positions each defined by rotation by a predetermined angle about a transport means 150. In the present embodiment, the predetermined angle is 90 degrees. The transport means 150 includes a rotating plate (not illustrated). A neck mold 151 described below is attached to the rotating plate. The rotating plate is configured to rotate with the neck mold 151 holding the preform 20, thereby transporting the preform 20 to each of the injection molding unit 110, the temperature adjusting unit 120, the blow molding unit 130, and the removal unit 140.

The injection molding unit 110 includes a mold for injection molding. The mold for injection molding at least includes an injection cavity mold (not illustrated) that defines the shape of an outer surface of the preform 20 (specifically, the outer surfaces of the body portion 22 and the bottom portion 23) and an injection core mold (not illustrated) that defines the shape of an inner surface of the preform 20 (specifically, the inner surfaces of the body portion 22, the bottom portion 23, and the neck portion 21). Further, the neck mold 151, which is also part of the transport means 150, is also part of the mold for injection molding. The neck mold 151 defines the shape of an outer periphery surface of the neck portion 21 of the preform 20. The above molds for injection molding form an injection cavity (molding space) corresponding to the preform 20 in a mold clamping state (mold closing state). The injection core mold and the neck mold 151 can be displaced in the up-down direction relative to the injection cavity mold. The injection core mold and the neck mold 151 move downward so as to directly or indirectly come into contact with the injection cavity mold on a machine platform at the time of molding (mold clamping time), and move upward so as to separate from the injection cavity mold at the time of mold release.

FIG. 2 exemplifies an overall configuration of the temperature adjusting unit 120. FIGS. 3A and 3B exemplify a rod member 122 used in the temperature adjusting unit 120. As exemplified in FIG. 2, the temperature adjusting unit 120 includes a mold for temperature adjustment used for adjusting the temperature of the preform 20 formed by the injection molding to a temperature suitable for blow molding. The mold for temperature adjustment at least includes a temperature adjusting mold (temperature adjusting pot mold) 121, a rod member 122, and a fitting core member 123. The temperature adjusting mold 121 constitutes an inner wall surface of a temperature adjusting cavity (a housing space of the preform 20). The temperature adjusting cavity corresponds to the shape of an outer wall surface (outer surface) of the preform 20. The rod member 122 is so configured as to be displaceable in the up-down direction. Therefore, the rod member 122 is configured to be inserted into the preform 20. The fitting core member 123 concentrically encloses the rod member 122, can be displaced in the up-down direction, and is configured to be able to contact the neck portion 21 of the preform 20. The fitting core member 123 encloses a lower portion (a portion to be inserted into the preform 20) of the rod member 122 in such a manner that the lower portion protrudes from a lower end portion of the fitting core member 123.

The rod member 122 is a cylindrical member, and an upper end portion (a diameter-extended portion, a flange portion) of the rod member 122 is coupled to and supported by a first fixing member (a first fixing block) 124. A first air introduction hole (first air flow hole) 122d is formed in the upper end portion of the rod member 122, and the first air introduction hole 122d communicates with a hole of the first fixing member 124 connected to a compressor. A first air flow path 122c, through which compressed air (air) introduced and output from the first air introduction hole 122d flows, is formed inside the rod member 122. The rod member 122 includes the lower portion to be inserted into the preform 20, and the lower portion includes a plurality of holes for ejecting (supplying) or sucking (exhausting) the compressed air. The lower end of the rod member 122 may be provided with a closing portion (stopper) 122e so as not to apply the compressed air to the bottom portion 23 of the preform 20.

The fitting core member 123 is a cylindrical member, and an upper end portion (a diameter-extended portion, a flange portion) of the fitting core member 123 is coupled to and supported by a second fixing member (a second fixing block) 125. A second air introduction hole (second air flow hole) 123c is formed in the upper end portion of the fitting core member 123, and the second air introduction hole 123c communicates with a hole of the second fixing member 125 connected to the compressor. A second air flow path 123b, through which compressed air introduced and output from the second air introduction hole 123c flows, is formed between an inner periphery surface of the fitting core member 123 and an outer periphery surface of the rod member 122. A lower end portion of the fitting core member 123 is brought into contact with the neck portion 21 of the preform 20 in an airtight manner. The first fixing member 124 supporting the rod member 122 and the second fixing member 125 supporting the fitting core member 123 are integrally coupled to each other and are configured as a single unit. The first fixing member 124 and the second fixing member 125 are coupled to a lifting mechanism (not illustrated) included in the manufacturing apparatus 100, and are so configured as to be displaceable in the up-down direction. Therefore, the rod member 122 and the fitting core member 123 may be displaced integrally (simultaneously) in the up-down direction.

The temperature adjusting mold 121 may be configured such that a gap is formed between the temperature adjusting mold 121 and the preform 20 housed in the temperature adjusting cavity. In this case, the temperature adjusting unit 120 may include, for example, a mechanism (the fitting core member 123 or the like) for introducing compressed air into the preform 20, and may stretch (inflate) the body portion 22 of the preform 20 by introducing the compressed air into the preform 20 to bring the body portion 22 into contact with the inner wall surface of the temperature adjusting cavity (preliminary blowing may be performed).

A plurality of first air flowing ports (an example of air flowing ports) 122a are formed in the lower portion of the rod member 122. The first air flowing port 122a is formed to be able to eject or suck the air. The plurality of first air flowing ports 122a are, when viewed along a direction perpendicular to the up-down direction (an example of an axis X direction of the preform 20), that is the same direction as the drawing illustrated in FIG. 3A), are formed in the up-down direction (the axis X direction). To be more specific, the first air flowing port 122a is formed in a passing-through mode in a direction perpendicular to an axis Y of the rod member 122 or in a passing-through mode in a direction inclined with respect to the axis Y, in an annular wall 122b of the rod member 122. As illustrated in FIG. 3, it is desirable that the plurality of first air flowing ports 122a are provided to face the entirety of an inner wall surface 22a of the body portion 22 in the up-down direction. For example, as illustrated in FIG. 3A, the first air flowing port 122a may be formed in such a manner as not to face either the neck portion 21 or the bottom portion 23, but to face the body portion 22. In this case, it is desirable that the first air flowing ports 122a are formed at predetermined intervals in the up-down direction. The first air flowing ports 122a may be provided at intersections of a plurality of imaginary lines extending radially from the center point of the rod member 122 on the same plane and the annular wall 122b.

As exemplified in FIG. 3B, the first air flowing ports 122a are desirably formed at predetermined intervals in a circumferential direction of the rod member 122. In this case, as illustrated in FIG. 3A, the plurality of first air flowing ports 122a may be formed in a staggered arrangement in which the first air flowing ports 122a are alternately arranged in the up-down direction and the circumferential direction. Differing from the example of the present embodiment, the plurality of first air flowing ports 122a may be formed in a parallel arrangement in which the first air flowing ports 122a are provided to be arranged side by side in the up-down direction and the circumferential direction. Further, the rod member 122 may be configured such that the number of first air flowing ports 122a and the sizes of the first air flowing ports 122a are different in the up-down direction of the rod member 122. The first air flowing port 122a is allowed not to be formed in part of the region of the annular wall 122b in the up-down direction of the rod member 122. Further, as another example, the first air flowing port 122a corresponding to a portion that is not desired to be cooled in the up-down direction of the body portion 22 may be closed.

The rod member 122 may be configured such that the number of first air flowing ports 122a and the sizes of the first air flowing ports 122a are different in the circumferential direction of the rod member 122. The first air flowing port 122a is allowed not to be formed in part of the region of the annular wall 122b in the circumferential direction of the rod member 122. Further, as another example, the first air flowing port 122a corresponding to a portion that is not desired to be cooled in the circumferential direction of the body portion 22 may be closed.

A second air flowing port 123a formed by the lower end (or inner periphery surface) of the fitting core member 123 and the outer periphery surface of the rod member 122 is provided at a position inside the neck portion 21 of the preform 20. The second air flowing port 123a has an annular cross section and is provided parallel to the axis Y of the rod member 122.

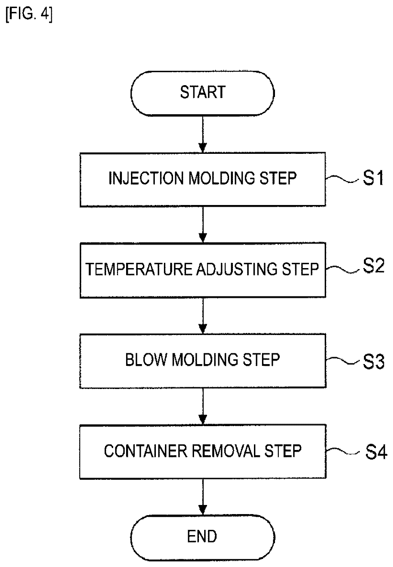

Next, a manufacturing method for a resin container will be described. FIG. 4 illustrates a manufacturing method for a resin container as an example. As exemplified in FIG. 4, a manufacturing method for a resin container includes an injection molding step S1, a temperature adjusting step S2, and a blow molding step S3. The manufacturing method of the present embodiment further includes a container removal step S4.

The injection molding step S1 includes injecting a molten resin into an injection cavity constituted by an injection-molding mold to form the preform 20. The injection molding step S1 may include causing the preform 20 to be subjected to mold release at high temperature. The injection molding step S1 may include a filling step in which a molten resin is injected into the injection cavity constituted by the injection-molding mold, and a cooling step in which the molten resin having been injected into the injection cavity is cooled. In a case of a material of the preform 20 is PET, the injection molding step S1 is, for example, as follows. First, PET in a solid state is melted in the injection device 111 set to a temperature equal to or higher than the melting point of PET (about 270°C), and the injection cavity of the mold for injection molding in a mold clamping state is filled with the molten PET (filling includes dwelling). Subsequently, in the mold for injection molding, the temperature of the preform 20 is lowered in a cooling time of 1/2 or less, preferably 1/3 or less of a filling time, and thereafter the preform 20 is released from the injection cavity mold and the injection core mold. The time taken for the filling step is referred to as the filling time, and the time taken for the cooling step is referred to as the cooling time. In the body portion 22 of the preform 20 after the mold release, a surface layer (skin layer) of the body portion 22 is preferably solidified to the extent that the preform 20 is not deformed at the time of mold release in such a manner as to have high residual heat (heat quantity). On the other hand, an internal layer (core layer) of the body portion 22 is preferably set to a temperature in a temperature zone in which the crystallization rate is high. The temperature of the surface layer of the preform 20 after the mold release is preferably 75°C or higher, more preferably 80°C or higher.

The temperature adjusting step S2 includes adjusting the temperature of the preform 20 to a temperature suitable for blow molding. To be specific, the preform 20 having been transported to the temperature adjusting unit 120 after the injection molding step S1 is housed in the temperature adjusting mold 121, and is brought into contact with the temperature adjusting mold 121 by the air (compressed air) ejected from the rod member 122 or the fitting core member 123, whereby the temperature of the preform 20 is adjusted to a temperature suitable for blow molding. Further, the temperature adjusting step S2 removes heat that has transferred from the internal layer to the surface layer in a short time, and suppresses spherulite formation (whitening) caused by slow cooling of the internal layer of the preform 20. The temperature of the temperature adjusting mold 121 is set to, for example, 20°C to 80°C, preferably 30°C to 65°C at the sites corresponding to the body portion 22 and the bottom portion 23 except for the site immediately below the neck portion 21.

The temperature adjusting step S2 includes ejecting (supplying) or sucking (exhausting) air from the first air flowing ports 122a formed in the outer periphery of the rod member 122 inserted into the preform 20 (in this case, air is sucked (exhausted) or ejected (supplied) from the second air flowing port 123a so that a flow of the air is generated). In the present embodiment, a case where air is ejected from the first air flowing ports 122a is exemplified. For example, as exemplified in FIG. 2, by introducing air from the first air flowing ports 122a provided in the rod member 122 inserted into the preform 20, the inner wall surface of the body portion 22 of the preform 20 facing the first air flowing ports 122a is cooled, and the internal layer adjacent to the inner wall surface is also cooled. The introduced air passes through the outside of the rod member 122 and is discharged from the second air flowing port 123a.

With this, the temperature adjustment or cooling is performed on the preform 20 by the outer wall surface of the body portion 22 coming into contact with the temperature adjusting mold 121, and at the same time, the preform 20 is cooled by the air being introduced toward the inner wall surface of the body portion 22. Thus, in the temperature adjusting step S2, the body portion 22 of the preform 20 can be efficiently cooled, and the temperature can be adjusted to an optimal temperature for blowing. The preform 20 having been cooled to the temperature optimal for blow molding in the temperature adjusting unit 120 is transported to the blow molding unit 130 while being held by the neck mold 151. Air may be introduced (supplied) from the second air flowing port 123a, and then the air may be sucked (exhausted) from the first air flowing ports 122a formed in the rod member 122. Before the preform 20 is cooled by flowing air (before cooling blowing is performed), it is preferable to perform preliminary blowing to bring the body portion 22 of the preform 20 into close contact with the temperature adjusting mold 121.

The blow molding step S3 includes manufacturing a resin container by blow-molding the preform 20. The manufactured resin container is transported to the removal unit 140 while being held by the neck mold 151, and is removed from the manufacturing apparatus 100 in the container removal step S4.

In order to shorten a cycle time taken for manufacturing the resin containers, it is important to shorten the time taken for the injection molding step. The shortening of the time taken for the injection molding step means that the preform is released from the injection-molding mold at high temperature. In this case, the preform is to be cooled in a shorter time in the temperature adjusting step subsequent to the injection molding step.

However, it may be difficult to perform appropriate cooling in a short time when a preform with a body portion relatively long with respect to the diameter and large in thickness, which is suitable for molding a medium- or large-sized container (e.g., a 5-gallon container), a narrow-mouthed spherical container, or the like, is cooled. In particular, when only one air flowing port is provided at the tip of the rod member, the coolest air hits the vicinity of the bottom portion. In addition, since the preform is relatively long with respect to the diameter, air warmed by heat exchange with the preform passes through the body portion closer to the neck portion. Because of this, the body portion is unlikely to be cooled uniformly, and the entire preform is unlikely to be cooled in a short time in some cases.

However, according to the manufacturing apparatus 100 for a resin container having the above-described configuration, the rod member 122 is provided with the plurality of first air flowing ports 122a over a region in the up-down direction, which is the axis X direction of the preform 20. In the manufacturing method for a resin container, the temperature adjusting step S2 includes ejecting or sucking air from the above-described first air flowing ports 122a. This makes it possible to simultaneously cool a wider range in the up-down direction with respect to the body portion 22 of the preform 20. Thus, the preform 20 having a desired temperature distribution can be obtained in a shorter time.

According to the manufacturing apparatus 100 having the above-discussed configuration and the manufacturing method for a resin container, the plurality of first air flowing ports 122a are formed at predetermined intervals in such a manner as to face the entire inner wall surface 22a of the body portion 22 in the up-down direction, which is the axis X direction of the preform 20. With this, the entire preform 20 is uniformly cooled over the entire region in the up-down direction.

According to the manufacturing apparatus 100 having the above-discussed configuration, the plurality of first air flowing ports 122a are formed at predetermined intervals in the circumferential direction of the rod member 122. With this, the entire preform 20 is uniformly cooled also in the circumferential direction.

Further, when the first air flowing port 122a of the rod member 122 is set to be unusable (closed with a closing member such as an aluminum tape, or the like) in a partial region in the up-down direction or the circumferential direction, it becomes possible to locally adjust a site of the body portion 22 to be cooled by the compressed air or optionally adjust cooling power to be applied to the body portion 22. In order to make it possible to manufacture various resin containers 30, it is necessary to adjust the temperature of the preform 20 in such a manner as to obtain temperature distribution corresponding to each container design. When some of the first air flowing ports 122a of the rod member 122 of the present disclosure are closed, it becomes possible to provide the preforms 20 having various pieces of temperature distribution, and thus the customizability of the manufacturing apparatus 100 is improved.

For example, when some of the first air flowing ports 122a of the rod member 122 are closed with a closing member, the amount of air ejected from the first air flowing ports 122a not covered with the closing member and the ejection rate of the air ejection therefrom can be increased. This makes it possible to increase the cooling power of an optional portion (a portion of the body portion on the side not covered with the closing member) of the body portion 22 of the preform 20.

For example, when a high temperature site extending in the longitudinal axis direction (temperature deviation) is generated in the body portion 22 of the preform 20 released from the mold, the amount of air ejected from the first air flowing ports 122a of the high temperature site can be increased by closing some of the first air flowing ports 122a of the rod member 122 corresponding to the body portion 22 on the low temperature side with the closing member. This increases the cooling power of the temperature deviation site, and eliminates the temperature deviation of the preform 20, thereby making it easy to adjust the temperature to be uniform.

When it is desired to lower the temperatures of a lower part of the body portion 22 and the bottom portion 23 of the preform 20 than those of other portions (when it is desired to increase the thicknesses of a heel portion and a grounding portion of the container to raise a level of rigidity), the temperatures of the lower part of the body portion 22 and the bottom portion 23 of the preform 20 can be lowered by closing, with the closing member, some of the first air flowing ports 122a not located in the lower part of the body portion 22 nor in the vicinity of the bottom portion 23.

Conversely, when it is desired to raise the temperature of a predetermined site of the body portion 22 to a temperature higher than those of other portions (for example, when it is desired to reduce the thickness of a shoulder portion of the container to improve the thickness distribution of the entire container), the temperature of the predetermined site of the body portion 22 can be raised by closing the first air flowing ports 122a corresponding to the predetermined site with the closing member.

In addition, closing the first air flowing ports 122a located on a facing surface of the rod member 122 with the closing member can be applied also to the molding of a flat container.

When the preform 20 is cooled by ejecting (supplying) air from the second air flowing port 123a and sucking (exhausting) the air from the first air flowing ports 122a, it is possible to flow cold air to the lower position of the body portion 22 of the preform 20 by closing some of the first air flowing ports 122a located in an upper part of the rod member 22. This makes it possible to change the cooling power in the up-down direction of the body portion 22 of the preform 20.

Further, in the molding adjustment or the molding test, by adjusting the position of the first air flowing port 122a to be closed with the closing member, based on the thickness distribution of the container after blow molding, the cooling site and the cooling power of the preform 20 may be easily adjusted in accordance with various types of containers. This makes it possible for the manufacturing apparatus 100 to cool the preform 20 flexibly (with a high degree of flexibility).

The embodiments of the present disclosure have been described thus far, but it is needless to say that the technical scope of the present disclosure is not to be interpreted in a limited manner by the description of the embodiments. The present embodiments are merely examples, and it is understood by those skilled in the art that various modifications of the embodiments are possible within the scope of the invention described in the claims. The technical scope of the present disclosure is to be determined based on the scope of the invention described in the claims and the scope of equivalents thereof.

For example, the air flowing port exemplified in the present embodiment has a circular shape, but may be formed in a polygonal shape or a slit shape. The air flowing port size and the number of air flowing ports are not limited to those exemplified in the present embodiment, and may be selected as appropriate. The air flowing port of the present disclosure may be formed in a rod member constituted by two or more hollow tubes.

The present application appropriately incorporates contents disclosed in JP 2022-211667 filed on Dec. 28, 2022.

### Reference Signs List

20 Preform
21 Neck portion
22 Body portion
22a Inner wall surface
23 Bottom portion
100 Manufacturing apparatus
110 Injection molding unit
111 Injection device
120 Temperature adjusting unit
121 Temperature adjusting mold
122 Rod member
122a (First) air flowing port
130 Blow molding unit
140 Removal unit
150 Transport means
151 Neck mold
S1 Injection molding step
S2 Temperature adjusting step
S3 Blow molding step
S4 Container removal step

## Claims

1. A manufacturing apparatus for a resin container, comprising:
an injection molding unit including an injection-molding mold and configured to inject a molten resin into an injection cavity defined by the injection-molding mold and form a preform;
a temperature adjusting unit configured to adjust a temperature of the preform to a temperature suitable for blow molding; and
a blow molding unit configured to blow-mold the preform whose temperature has been adjusted, wherein
the temperature adjusting unit includes a rod member configured to be inserted into the preform, and
a plurality of air flowing ports configured to eject or suck air, as viewed along a direction perpendicular to an axial direction of the preform, are formed in the rod member in the axial direction.

2. The manufacturing apparatus for a resin container according to claim 1,
wherein
the preform includes a neck portion forming an opening of the preform, a body portion connected to the neck portion, and a bottom portion connected to the body portion, and
the plurality of air flowing ports are formed at predetermined intervals in such a manner as to face an entire inner wall surface of the body portion in the axial direction of the preform.

3. The manufacturing apparatus for a resin container according to claim 1 or 2,
wherein
the plurality of air flowing ports are formed at predetermined intervals in a circumferential direction of the rod member.

4. A manufacturing method for a resin container, comprising:
an injection molding step of injecting a molten resin into an injection cavity defined by an injection-molding mold and forming a preform;
a temperature adjusting step of adjusting a temperature of the preform to a temperature suitable for blow molding; and
a blow molding step of blow-molding the preform whose temperature has been adjusted, wherein
the temperature adjusting step includes ejecting or sucking air through an air flowing port formed in an outer periphery of a rod member inserted into the preform, and
a plurality of the air flowing ports, as viewed along a direction perpendicular to an axial direction of the preform, are formed in the axial direction.

5. The manufacturing method for a resin container according to claim 4, wherein
the preform includes a neck portion forming an opening of the preform, a body portion connected to the neck portion, and a bottom portion connected to the body portion, and
the plurality of air flowing ports are formed at predetermined intervals in such a manner as to face an entire inner wall surface of the body portion in the axial direction of the preform.

6. A mold for temperature adjustment configured to adjust a temperature of a preform formed by injection molding to a temperature suitable for blow molding, the mold for temperature adjustment comprising:
a temperature adjusting mold constituting an inner wall surface of a temperature adjusting cavity; and
a rod member configured to be inserted into the preform, wherein
a plurality of air flowing ports configured to eject or suck air, as viewed along a direction perpendicular to an axial direction of the preform, are formed in the rod member in the axial direction.
